# EUROPÄISCHE PATENTANMELDUNG

(11) **EP 4 391 097 A1**
(43) Veröffentlichungstag der Anmeldung: **26.06.2024**
(21) Anmeldenummer: 22215900.6
(22) Anmeldetag: 22.12.2022
(51) Int. Cl.: H01M 4/04, H01M 4/13, H01M 4/134, H01M 4/62, H01M 10/052, H01M 4/131

(54) **VERFAHREN ZUR HERSTELLUNG DICKER ELEKTRODENFILME FÜR SEKUNDÄRE ALKALI-IONEN-ENERGIESPEICHERVORRICHTUNGEN**

(71) Anmelder: OQ Chemicals GmbH, 40789 Monheim am Rhein (DE)
(72) Erfinder: FISCHER, Claudia, 67069 Ludwigshafen (DE); KUBITSCHKE, Jens, 40237 Düsseldorf (DE)
(74) Vertreter: Michalski Hüttermann & Partner Patentanwälte mbB

(57) **Zusammenfassung**

Die vorliegende Erfindung betrifft ein Verfahren zur Herstellung dicker Elektrodenfilme mit einer Schichtdicke von größer oder gleich 100 µm und kleiner oder gleich 600 µm für sekundäre Alkali-Ionen-Energiespeichervorrichtungen, wobei das Verfahren die Schritte umfasst: a) Herstellen einer Dispersion umfassend mindestens ein Lösungsmittel und Feststoffe mit einem Gesamtfeststoffgehalt der Dispersion von größer oder gleich 40 Gew.-% und kleiner oder gleich 80 Gew.-%, wobei die Feststoffe Aktivmaterial, einen oder mehrere Leitfähigkeitszusätze, und ein oder mehrere Binder umfassen, und Einmischen von Butandiol in einer Konzentration von größer oder gleich 2 Gew.-% und kleiner oder gleich 10 Gew.-% bezogen auf das Gesamtgewicht in die Dispersion; b) Ausbringen der Dispersion in einer Schichtdicke von größer oder gleich 200 µm und kleiner oder gleich 1200 µm; und c) Trocknen der ausgebrachten Dispersion unter Erhalt eines Elektrodenfilms. Des Weiteren betrifft die vorliegende Erfindung die Verwendung des erfindungsgemäßen Verfahrens zur Herstellung von Elektrodenfilmen sowie Elektrodenfilme mit einer Schichtdicke von größer oder gleich 100 µm und kleiner oder gleich 600 µm mit einer spezifischen

## Beschreibung

Die vorliegende Erfindung betrifft ein Verfahren zur Herstellung dicker Elektrodenfilme mit einer Schichtdicke von größer oder gleich 100 µm und kleiner oder gleich 600 µm für sekundäre Alkali-Ionen-Energiespeichervorrichtungen, wobei das Verfahren die Schritte umfasst: a) Herstellen einer Dispersion umfassend mindestens ein Lösungsmittel und Feststoffe mit einem Gesamtfeststoffgehalt der Dispersion von größer oder gleich 40 Gew.-% und kleiner oder gleich 80 Gew.-%, wobei die Feststoffe Aktivmaterial, einen oder mehrere Leitfähigkeitszusätze, und ein oder mehrere Binder umfassen, und Einmischen von Butandiol in einer Konzentration von größer oder gleich 2 Gew.-% und kleiner oder gleich 10 Gew.-% bezogen auf das Gesamtgewicht in die Dispersion; b) Ausbringen der Dispersion in einer Schichtdicke von größer oder gleich 200 µm und kleiner oder gleich 1200 µm; und c) Trocknen der ausgebrachten Dispersion unter Erhalt eines Elektrodenfilms. Des Weiteren betrifft die vorliegende Erfindung die Verwendung des erfindungsgemäßen Verfahrens zur Herstellung von Elektrodenfilmen sowie Elektrodenfilme mit einer Schichtdicke von größer oder gleich 100 µm und kleiner oder gleich 600 µm mit einer spezifischen Zusammensetzung.

Moderne elektrische Energiespeicher müssen für die Markttauglichkeit eine Vielzahl unterschiedlicher Qualitätsanforderungen erfüllen. Neben den Herstellkosten sind dies beispielsweise die Sicherheit des Aufbaus, die Höhe der Selbstentladung als Funktion der Zeit, die Wiederaufladegeschwindigkeit, generelle Zelllebensdauer, ein robustes Temperaturverhalten sowie die Zyklenstabilität. Neben diesen Randanforderungen spielt natürlich auch die elektrische Leistungsfähigkeit der Energiespeicher eine entscheidende Rolle. Ein wesentlicher Faktor der elektrischen Leistungsfähigkeit der hier betrachteten Alkali-lonen-Energiespeicher ergibt sich aus dem Verhältnis aus in die Elektroden des Batterieaufbaus einlagerbarer Alkali-Menge und dem dafür einzusetzenden Gewicht der Elektroden. Dieser Quotient ist ein wichtiges Maß für die maximal speicherbare elektrische Energiemenge von Akkumulatoren und Kondensatoren und wirkt sich direkt auf das nötige Gewicht von Energiespeichern zur Bereitstellung spezifischer Energiemengen aus. Unglücklicherweise lässt sich dieser Parameter im Falle von Lithium-lonenbatterien nicht einfach dadurch verbessern, indem man mehr Einlagerungsvolumen in Form dickerer Elektrodenfilme oder -schichten mit einer größeren Menge an Aktivmaterial bereitstellt, welche dann potentiell eine höhere Menge an Ladungsträgern speichern können. Die Schwierigkeiten in der Fertigung homogener und unter den Ein- und Auslagerungsbedingungen mechanisch stabiler Elektrodenfilme nimmt exponentiell mit der Schichtdicke zu, so dass dickere Schichten häufiger an intrinsischen Defekten, wie beispielsweise Rissen, und Haftungsproblemen der Schichten an den Stromabnehmern leiden, welche unter Anwendungsbedingungen zu einem frühzeitigen Versagen der Elektrodenstrukturen führen.

Auch in der Patentliteratur finden sich die unterschiedlichsten Ansätze zur Fertigung von Elektrodenfilmen oder Elektroden für wiederaufladbare Alkalimetall-Batterien.

So beschreibt beispielsweise die US 2014 178 788 A1 die Herstellung einer Katalysatoraufschlämmung für eine Brennstoffzelle, eine unter Verwendung der Katalysatoraufschlämmung hergestellte Elektrode, eine Membran-Elektroden-Anordnung mit der Elektrode, eine Brennstoffzelle mit der Membran-Elektroden-Anordnung und ein Verfahren zur Herstellung der Elektrode bereitgestellt. Die Katalysatoraufschlämmung umfasst ein Katalysatormaterial, eine Säurekomponente, ein Bindemittel und eine Lösungsmittelkomponente mit einer Viskosität von mindestens etwa 20 cps bei etwa 20°C. Die KR101603657B1 offenbart ein Verfahren zur Herstellung eines aktiven Kathodenmaterials für eine Lithium-Sekundärbatterie und eine Lithium-Sekundärbatterie, die das nach dem Verfahren hergestellte aktive Kathodenmaterial enthält. Bei dem Verfahren zur Herstellung eines aktiven Kathodenmaterials für eine Lithium-Sekundärbatterie gemäß einer Ausführungsform der vorliegenden Erfindung beträgt das Mischungsverhältnis der ersten Metalllösung und der zweiten Metalllösung zu dem komplexen lonenbildungsmittel und der ersten Metalllösung 100:0 bis 0:100 vol Einspritzen der gemischten ersten Lösung in den Reaktor, während die zweite Metalllösung allmählich bewegt wird, bis das Verhältnis der zweiten Metalllösung 1% beträgt, Rühren der ersten gemischten Lösung und des Fällungsmittels in den Reaktor, während das Fällungsmittel in den Reaktor eingespritzt wird. Bilden eines ersten Niederschlags, wenn die Reaktion zwischen der ersten Metalllösung und der zweiten Metalllösung abgeschlossen ist, wird eine zweite gemischte Lösung, in der ein komplexionenbildendes Mittel und eine dritte Metalllösung gemischt sind, in den Reaktor eingespritzt, um mit dem Niederschlag zu reagieren Dadurch wird ein zweiter Niederschlag auf der Oberfläche des ersten Niederschlags gebildet, und Waschen und Trocknen der ersten und zweiten Ausfällungen, gefolgt von einer Wärmebehandlung, wobei die erste Metalllösung und die zweite Metalllösung und die dritte Metalllösung Ni, Co und Mn enthalten und die Ni-Konzentration (Mol-%) in der Metalllösung in der Reihenfolge der ersten Metalllösung, der zweiten Metalllösung und der dritten Metalllösung abnimmt.

Weiterhin beschreibt die US 2008 089 006 A1 ein Energiespeichervorrichtungs-Elektrodenprodukt. Das Produkt umfasst: mindestens einen Stromkollektor und mindestens einen Elektrodenfilm, der neben dem mindestens einen Stromkollektor angeordnet ist. Der mindestens eine Stromkollektor umfasst mehrere Hohlräume, die sich durch eine Dicke des Stromkollektors erstrecken, wobei die mehreren Hohlräume ermöglichen, dass Elektrolyt durch die Dicke des Stromkollektors fließt. Die Vielzahl von Hohlräumen, die sich durch den Stromkollektor erstrecken, wird gebildet, ohne einen Oberflächenbereich eines leitfähigen Materials des Stromkollektors, der angrenzend an die Elektrode angeordnet ist, um mehr als etwa fünfzig Prozent zu reduzieren. Ein Verfahren zum Herstellen eines Elektrodenprodukts und ein Doppelschichtkondensatorprodukt werden ebenfalls offenbart.

Derartige aus dem Stand der Technik bekannte Lösungen können noch weiteres Verbesserungspotential bieten. Dies bezieht sich insbesondere auf Herstellung gleichmäßiger, rissfreier und dicker Elektrodenschichten.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung ein Verfahren bereitzustellen, welches die Herstellung dicker und rissfreier Elektrodenschichten für den Einsatz in Alkali-Ionen-Energiespeichern ermöglicht. Des Weiteren ist es die Aufgabe der vorliegenden Erfindung eine erfindungsgemäße Verwendung des Verfahrens zur Herstellung von Elektrodenfilmen sowie Elektrodenfilme bereitzustellen, welche unter hohen Schichtdicken eine sehr homogene Struktur ohne Risse und eine verbesserte Anhaftung der Elektrodenfilme an die Stromabnehmer der Elektrode aufweisen.

Die Lösung der Aufgabe erfolgt durch die Merkmale der unabhängigen Ansprüche, gerichtet auf das erfindungsgemäße Verfahren, die erfindungsgemäße Verwendung des Verfahrens sowie die erfindungsgemäßen Elektrodenfilme. Bevorzugte Ausgestaltungen der Erfindung sind in den Unteransprüchen, in der Beschreibung oder den Figuren angegeben, wobei weitere in den Unteransprüchen, in der Beschreibung oder den Figuren beschriebene oder gezeigte Merkmale einzeln oder in einer beliebigen Kombination einen Gegenstand der Erfindung darstellen können, solange sich aus dem Kontext nicht eindeutig das Gegenteil ergibt.

Erfindungsgemäß ist ein Verfahren zur Herstellung dicker Elektrodenfilme mit einer Schichtdicke von größer oder gleich 100 µm und kleiner oder gleich 600 µm für sekundäre Alkali-Ionen-Energiespeichervorrichtungen, wobei das Verfahren die Schritte umfasst:
a) Herstellen einer Dispersion umfassend mindestens ein Lösungsmittel und Feststoffe mit einem Gesamtfeststoffgehalt der Dispersion von größer oder gleich 40 Gew.-% und kleiner oder gleich 80 Gew.-%, wobei die Feststoffe
   - ein Aktivmaterial in einem Anteil von größer oder gleich 75 Gew.-% und kleiner oder gleich 98 Gew.-%,
   - einen oder mehrere Leitfähigkeitszusätze in einem Anteil von größer oder gleich 0,5 Gew.-% und kleiner oder gleich 5 Gew.-% und
   - ein oder mehrere Binder in einem Anteil von größer oder gleich 1 Gew.-% und kleiner oder gleich 10 Gew.-%
   umfassen, und sich die Gewichtsanteile der Feststoffe in der Dispersion zu 100 Gew.-% ergänzen;
   und Einmischen von Butandiol in einer Konzentration von größer oder gleich 2 Gew.-% und kleiner oder gleich 10 Gew.-% bezogen auf das Gesamtgewicht in die Dispersion;
b) Ausbringen der Dispersion in einer Schichtdicke von größer oder gleich 200 µm und kleiner oder gleich 1200 µm; und
c) Trocknen der ausgebrachten Dispersion unter Erhalt eines Elektrodenfilms.

Überraschenderweise wurde gefunden, dass über oben angegebenes Verfahren Dispersionen mit spezifischen Zusammensetzungen erhältlich sind, welche in Form dicker Schichten ausgebracht und homogen und rissfrei in Form dicker Elektrodenfilme getrocknet werden können. Die Elektrodenfilme eignen sich insbesondere als Teil der Elektrodenaufbauten zum Einsatz in Alkali-Ionen-Energiespeichervorrichtungen. Die Elektroden zeichnen sich dabei durch gute elektrische Eigenschaften aus und können aufgrund ihrer Dicke mehr elektrische Ladungsträger in den Elektroden speichern. Als Konsequenz davon kann durch die größere Menge an Aktivmaterial bei annähernd gleichem Gesamtbatteriegewicht eine größere Menge an elektrischer Leistung bereitgestellt werden. Die Elektrodenfilme sind nach dem Trocknen insbesondere rissfrei, welches eine der Grundvoraussetzungen für eine hohe Zykluszahl ist. Dieses Verhalten ergibt sich insbesondere im Vergleich mit Stand-der-Technik-Verfahren unter Einsatz Butandiol-freier Dispersionen, welche bei Einsatz im Bereich relativ hoher Schichtdicken zu starker Rissbildung nach der Trocknung neigen. Dieser positive Effekt auf die Rissbildung zeigt sich erstaunlicherweise besonders stark für den Zusatz des Butandiols im angegebenen Konzentrationsbereich. Die gefundenen Effekte auf die Schichten sind für das Butandiol deutlich größer als die erreichbaren Effekte durch Zusatz vergleichbarer oder ähnlicher Alkohole oder Diole. Die makroskopischen und mikroskopischen Effekte über das Butandiol sind deutlich größer oder lassen sich mit einem deutlich geringeren Gehalt erreichen. Ohne durch die Theorie gebunden zu sein scheint das Butandiol mit dem Aktivmaterial und den Bindern im Rahmen der Herstellung der Dispersion und im Rahmen der Trocknung der Schicht so wechselzuwirken, dass eine verbesserte Haftung des Aktivmaterials untereinander und/oder eine verbesserte Wechselwirkung des Aktivmaterials mit den Bindern erreichbar ist. Als alternativer oder zusätzlicher Erklärungsansatz kann auch angenommen werden, dass das Butandiol zu einer gleichmäßigeren Ausbringung der Dispersion unter Schereinwirkung und/oder einer mechanisch schonenderen Entfernung des gesamten Lösungsmittels im Rahmen des Trocknungsprozesses führen kann. Letzteres kann sich gerade bei der Ausbringung dicker Schichten bemerkbar machen. In Summe ergeben sich in den erhältlichen, trockenen Elektrodenfilmen deutlich geringere Risse sowie eine verbesserte Anhaftung des Elektrodenfilms am Stromabnehmer der Elektrode.

Das erfindungsgemäße Verfahren ist ein Verfahren zur Herstellung dicker Elektrodenfilme mit einer Schichtdicke von größer oder gleich 100 µm und kleiner oder gleich 600 µm für sekundäre Alkali-lonen-Energiespeichervorrichtungen. Sekundäre Alkali-lonen-Energiespeichervorrichtungen sind im Gegensatz zu galvanischen Primärelementen wiederaufladbare elektrische Speicher. Sie speichern elektrische Energie in Form von chemischer Energie. Beispiele solcher sekundären Energiespeicher sind Lithium-lonenbatterien oder -Kondensatoren. Eingesetzt werden die Speicher in Handys, Elektro- und Hybridautos, Laptops und allen anderen Elektrogeräten, die ohne Stromkabel funktionieren. Umgangssprachlich werden galvanische Sekundärelemente auch als Akkus oder Akkumulatoren bezeichnet. Möglich ist der Einsatz von Natrium-, Lithium- oder Kaliumionen als Alkaliionenbasis. Die Hauptkomponenten einer Batteriezelle bilden üblicherweise die beiden Elektroden in Form von Anode und Kathode, ein Separator, der Elektrolyt und das Zellgehäuse. Die Elektroden bestehen aus einer mit dem Elektrodenfilm beschichteten Metallfolie, dem Stromsammler oder Stromabnehmer. Die auf dem Stromsammler befindlichen Elektrodenschichten sind der Ort, in denen die Alkali-Ionen während der Ladung/Entladung ein- oder ausgelagert werden. In dem erfindungsgemäßen Verfahren weisen diese Schichten im trockenen Zustand eine gewisse Mindestdicke auf. Die Schichten sind nach der Trocknung, ohne Lösungsmittel, mindestens 100 µm, bevorzugt mindestens 150 µm, weiterhin bevorzugt mindestens 200 µm dick. Die maximale Dicke kann weiterhin bevorzugt im Bereich von kleiner oder gleich 500 µm, weiter bevorzugt kleiner oder gleich 400 µm und weiter bevorzugt bei kleiner oder gleich 350 µm liegen.

Das Verfahren umfasst den Verfahrensschritt a), in welchen eine Dispersion aus mindestens einem Lösungsmittel und mehreren Feststoffen hergestellt wird. Der Gesamtfeststoffgehalt der Dispersion ist größer oder gleich 40 Gew.-% und kleiner oder gleich 80 Gew.-%. Im ersten Verfahrensschritt wird eine Mischung der unterschiedlichen Komponenten der Dispersion hergestellt. Dazu können zuerst die trockenen Komponenten der Dispersion trocken, d.h. ohne Lösungsmittelzusatz, homogen unter Eintrag von Energie vorgemischt werden. Es ist aber auch möglich, dass erst das Lösungsmittel vorgelegt und dann die Feststoffe zugegeben und diese Dispersion unter Eintrag von Energie homogenisiert, gemischt und geschert wird. Es ist aber auch möglich, dass ein Teil der Feststoffe in einem Teil des Lösungsmittels zu einem anderen, trockenen und vorgemischten Teil gegeben oder vorgelegt wird. Das restliche Lösungsmittel kann dann zu der teillösungsmittelhaltigen Mischung gegeben werden. Das Herstellen der Dispersion kann in üblichen Mischern, Mühlen oder Dispergiereinrichtungen unter dem Einsatz mehr oder weniger hoher Scherkräfte erfolgen. Wichtig ist, dass der Feststoffgehalt der Mischung aus den Feststoffen und dem Lösungsmittel im oben angegebenen Bereich liegt. Der Feststoffgehalt kann beispielsweise gravimetrisch aus dem Gewicht einer lösungsmittelhaltigen und einer lösungsmittelfreien Probe nach Trocknung bestimmt werden.

Die Dispersion enthält Feststoffe, wobei die Feststoffe ein Aktivmaterial in einem Anteil von größer oder gleich 75 Gew.-% und kleiner oder gleich 98 Gew.-% umfassen. Das Aktivmaterial des Elektrodenfilms ist für die reversible Einlagerung der chemisch aktiven Spezies verantwortlich. Es werden zur Zeit für die Anode und die Kathode unterschiedliche Aktivmaterialien verwendet. Als Aktivmaterial für Kathoden in Lithium-Ionen-Batterien können beispielsweise Olivine (LiMPO₄, M = Fe, Mn, Co, Ni), Schicht-Metalloxide (LiMOz, M = Co, Ni, Mn) oder Spinelle (LiM₂O₄, M = Ni, Mn) eingesetzt werden. Mögliche Aktivmaterialien sind beispielsweise LiFePO₄ (LFP), Lithium-Nickel-Mangan-Cobalt-Oxide (NMC) oder Lithium-Nickel-Cobalt-Aluminium-Oxid (NCA). Als Anodenaktivmaterialien können vorwiegend Grafite eingesetzt werden. Es kommen unterschiedliche Grafitarten in Form von MCMBs (MesoCarbon MicroBeads), synthetische oder natürliche Grafite oder Grafite in Form von Nanoröhren in Frage. Möglich ist auch der Einsatz von Lithiumtitanat (Li₄Ti₅O₁₂, LTO) oder Silicium-Kohlenstoff-Komposite. In Bezug auf die gesamten Festsubstanzen der Dispersion liegt der Anteil des Aktivmaterials im oben angegebenen Gewichtsbereich.

Die Dispersion enthält einen oder mehrere Leitfähigkeitszusätze in einem Anteil von größer oder gleich 0,5 Gew.-% und kleiner oder gleich 5 Gew.-%. Der Leitfähigkeitszusatz dient in der Regel zur Erhöhung der Leitfähigkeit des Aktivmaterials oder der Erhöhung der Leitfähigkeit des gesamten Elektrodenfilms. Als wichtigster Leitfähigkeitszusatz wird Ruß verwendet. In Bezug auf die gesamten Festsubstanzen der Dispersion liegt der Anteil des Leitfähigkeitszusatzes im oben angegebenen Gewichtsbereich.

Die Dispersion enthält ein oder mehrere Binder in einem Anteil von größer oder gleich 1 Gew.-% und kleiner oder gleich 10 Gew.-%, wobei die Gewichtsanteile der Feststoffe in der Dispersion sich zu 100 Gew.-% ergänzen. Das Bindemittel oder der Binder wird in der Elektrode hinsichtlich einer guten Kohäsion zwischen den Partikeln des Aktivmaterials und einer ausreichenden Haftung der gesamten Elektrode auf dem Stromabnehmer eingesetzt. Der Binder erhöht die mechanische Festigkeit des Elektrodenfilms. Dies kann durch den Einsatz des Binders als solchen erreicht werden. Es ist aber auch möglich, dass der Binder erst durch den Einsatz an Scherkräften so konditioniert werden muss, dass eine verbesserte Interaktion der einzelnen Bindermoleküle untereinander, beispielsweise durch die Ausbildung drei-dimensionaler Strukturen im Film, ermöglicht wird. Möglich ist der Einsatz synthetischer oder natürlicher Polymere, wie beispielsweise Teflon, Carboxymethylcellulose, Gelatine, Alginat beispielsweise in Form von Natriumalginat (SA), Pektin, Guar-Gummi, Styrol-Butadien-Gummi (SBR), Polyacrylsäure (PAA), oder PVDF. Es ist auch möglich, dass Mischungen unterschiedlicher Binder eingesetzt werden. So können beispielsweise in Kombination mit einem wässrigen Lösungsmittel insbesondere auch Mischungen aus CMC/PTFE, CMC/SA oder deren funktionalisierten Grundgerüste eingesetzt werden. In Bezug auf die gesamten Festsubstanzen der Dispersion liegt der Anteil des oder der Binder im oben angegebenen Gewichtsbereich.

In diesem Verfahrensschritt erfolgt auch das Einmischen von Butandiol in einer Konzentration von größer oder gleich 2 Gew.-% und kleiner oder gleich 10 Gew.-% bezogen auf das Gesamtgewicht in die Dispersion. Im Rahmen der Herstellung der Dispersion wird auch Butandiol zu den übrigen Bestandteilen der Dispersion gegeben. Das Butandiol kann mit zur trockenen Vormischung der festen Bestandteile, in einer Vormischung mit den Bindern, in einer Vormischung mit den Bindern und einem Teil des Lösungsmittels oder vor Zugabe des Lösungsmittels zu den trocken vorgemischten Bestandteilen gegeben werden. Bevorzugt ist die Zugabe des Butandiols zusammen mit oder kurz nach Zugabe des Lösungsmittels zu der Vormischung. In Bezug auf die das Gesamtgewicht der Dispersion mit flüssigen und festen Substanzen liegt der Anteil des Butandiols im oben angegebenen Gewichtsbereich.

Das Verfahren umfasst den Verfahrensschritt b), in welchem das Ausbringen der Dispersion in einer Schichtdicke von größer oder gleich 200 µm und kleiner oder gleich 1200 µm erfolgt. Nach der Herstellung der Dispersion wird die Dispersion in Form eines Filmes ausgebracht. Dies kann durch Gießen, Rakeln, Extrudieren oder Walzen erfolgen. Das Ausbringen kann dabei unter Scherkräften oder scherkräftefrei erfolgen. Die Dispersion kann auf einen Stromabnehmer, einen beschichteten Stromabnehmer oder auf ein sonstiges Material ausgebracht werden. Die Schichtdicke des ausgebrachten noch lösungsmittelhaltigen Filmes liegt dabei im oben angegebenen Bereich. Bevorzugt kann die Nassfilm-Schichtdicke größer oder gleich 250 µm und kleiner oder gleich 600 µm, weiter bevorzugt größer oder gleich 300 µm und kleiner oder gleich 450 µm betragen.

Das Verfahren umfasst den Verfahrensschritt c), in welchem das Trocknen der ausgebrachten Dispersion unter Erhalt eines Elektrodenfilms erfolgt. Die als Schicht ausgeformte Dispersion wird zum Erhalt des trockenen, insbesondere lösungsmittelfreien Films unter Zuführung von Energie in Form von Wärme oder aber auch ohne Wärmezufuhr getrocknet. Die Energiezufuhr kann über eine Kontakttrocknung an einer wärmeren Oberfläche, durch Strahlungswärme oder in sonstiger Art und Weise erfolgen. Die Trocknung kann unter Normaldruck oder unter reduziertem Druck erfolgen. Durch die Entfernung des Lösungsmittels reduziert sich die Schichtdicke und es werden in der Regel dünnere, lösungsmittelarme oder -freie Schichten erhalten. Der Lösungsmittelgehalt nach der Trocknung beträgt bevorzugt kleiner oder gleich 1,5 Gew.-%, des Weiteren bevorzugt kleiner oder gleich 0,5 Gew.-% und weiterhin bevorzugt kleiner oder gleich 0,005 Gew.-%. Im Rahmen der Trocknung ist es möglich, dass der Butandiolzusatz aus dem Elektrodenfilm ganz oder teilweise mit entfernt wird. Bevorzugt wird durch die Trocknung das Butandiol annähernd vollständig aus dem Elektrodenfilm entfernt.

In einer bevorzugten Ausführungsform des Verfahrens kann das Lösungsmittel Wasser sein. Zum Erhalt rissfreier Schichten mit sehr hohen Schichtdicken hat sich der Zusatz von Butandiol insbesondere zu wässrigen Dispersionen als besonders vorteilhaft herausgestellt. Es lassen sich dicke und rissfreie Elektrodenschichten erhalten, welche im Vergleich zu den ohne Butandiol-Zusatz oder mit anderen Alkoholen hergestellten Schichten zudem sehr vergleichbare elektrische Eigenschaften aufweisen. Der Butandiol-Zusatz führt also insbesondere nicht zu schlechteren elektrischen Eigenschaften des Elektrodenfilms, reduziert aber deutlich die Rissneigung und die Haftung der Schichten im Rahmen der Trocknung. Es lassen sich bei gegebener Schichtdicke deutlich höhere Ausbeuten an rissfreien Elektrodenfilmen mit sehr vergleichbaren elektrischen Eigenschaften erhalten.

Innerhalb einer weiter bevorzugten Ausgestaltung des Verfahrens kann das Butandiol 1,3-Butandiol sein. Unter den Butandiol-Isomeren hat sich insbesondere das 1,3-Butandiol (1,3-BG) als besonders geeignet herausgestellt. Es lassen sich mit relativ geringen Zusatzmengen zu den Dispersionen rissfreie Elektrodenfilme erhalten. Zudem zeigt der Zusatz von 1,3-BG eine Verbesserung der Homogenität der Schichten auch unter dem Eintrag von relativ geringen mechanischen Kräften zum Erhalt der Dispersion. Dies kann die Gleichmäßigkeit der Filme verbessern und zu einer Schonung des Bindergerüsts beitragen.

Innerhalb eines weiter bevorzugten Aspektes des Verfahrens kann das Butandiol in einer Konzentration von größer oder gleich 2 Gew.-% und kleiner oder gleich 6 Gew.-% zur Dispersion gegeben werden. Innerhalb dieser Mengen an Butandiol-Zusatz lassen sich homogene, mechanisch stabile, rissfreie, gut haftende und elektrisch leistungsfähige Elektrodenfilme erhalten. Die Zusatzmenge führt im Vergleich zu Dispersionen ohne weiteren Zusatz zudem zu einer nur unwesentlich veränderten Trocknungskinetik der Filme. Bevorzugt kann die Butandiol-Konzentration größer oder gleich 3,0 Gew.-% und kleiner oder gleich 5,5 Gew.-%, weiterhin bevorzugt größer oder gleich 3,5 Gew.-% und kleiner oder gleich 5,0 Gew.-% betragen.

Nach einer bevorzugten Charakteristik des Verfahrens können als Binder mindestens zwei unterschiedlicher Binder eingesetzt werden, wobei einer der Binder in Wasser quellbar und der andere Binder in Wasser nicht quellbar ist. Die Aufteilung des eingesetzten Bindermaterials in zwei unterschiedliche Klassen als Funktion der Hydrophilität und Lipophilität hat sich als besonders geeignet herausgestellt. Es werden durch die Aufteilung auch bei sehr hohen Trockenfilmdicken sehr homogene und mechanisch stabile Schichten erreicht. Ohne durch die Theorie gebunden zu sein, scheint das 1 ,3-BG nicht nur die Wechselwirkungen des partikulären Aktivmaterials untereinander, sondern auch die Wechselwirkungen und das Quellungsverhalten der Bindermaterialien im Lösungsmittel zu beeinflussen, sodass verbesserte Wechselwirkungen der unterschiedlichen Bindermaterialien innerhalb der Schicht erhalten werden können. Ein Binder ist in Wasser quellbar, wenn das Bindermaterial bei Raumtemperatur als 1 Gew.-%ige Lösung mehr als 10 Gew.-% an Wasser im Gleichgewicht aufnimmt. Die Wassermenge kann nach Abtrennen und Abtropfen des gequollenen Materials gravimetrisch bestimmt werden. Die prinzipielle Wasserquellbarkeit der unterschiedlichen Bindermaterialien in Bezug auf Wasser ist aber auch in der Literatur angegeben. Bevorzugt werden die beiden unterschiedlichen Binder in jeweils signifikanten Mengen eingesetzt. So kann das Gewichtsverhältnis der beiden Binder zueinander bevorzugt größer oder gleich 0,2 und kleiner oder gleich 2 betragen.

In einer weiter bevorzugten Ausführungsform des Verfahrens können als Binder Carboxymethylcellulose und Styrol-Butadien-Kautschuk (SBR) eingesetzt werden. Zum Erhalt besonders mechanisch stabiler, dicker und rissfreier Elektrodenschichten hat sich der Einsatz eines wasserquellbaren und eines nicht-wasserquellbaren Binderpaares als besonders geeignet herausgestellt. Insbesondere mit Wasser als Lösungsmittel und unter Einsatz von 1,3 BG werden hohe Ausbeuten an rissfreien Elektrodenfilmen erhalten, welche zudem in den elektrischen Eigenschaften mit Filmen ohne 1,3-BG-Zusatz sehr vergleichbar sind. Besonders bevorzugt können die Gewichtsanteile der beiden unterschiedlichen Bindermaterialien 1:1 betragen. Bevorzugt können die Gewichtsanteile von der 1:1-Verteilung auch für beide Komponenten in beide Richtungen um jeweils 15 Gew.-%, bevorzugt um 10 Gew.-% variieren.

Innerhalb eines bevorzugten Aspektes des Verfahrens kann im Verfahrensschritt a)
- das Aktivmaterial in einem Anteil von größer oder gleich 90 Gew.-% und kleiner oder gleich 98 Gew.-%;
- der Leitfähigkeitszusatz in einem Anteil von größer oder gleich 1 Gew.-% und kleiner oder gleich 5 Gew.-% und
- der oder die Binder in einem Anteil von größer oder gleich 2 Gew.-% und kleiner oder gleich 6 Gew.-%
bezogen auf die gesamten Feststoffe in der Dispersion vorliegen und sich die Gewichtsanteile der Feststoffe in der Dispersion zu 100 Gew.-% ergänzen. Innerhalb dieser Zusammensetzungen der Dispersionen lassen sich mechanisch sehr stabile, rissfreie und gut haftende Elektrodenfilme erhalten. Die Filme zeigen im direkten Vergleich mit Elektrodenfilmen erhalten aus Dispersionen ohne Butandiol-Zusatz zudem sehr vergleichbare elektrische Eigenschaften. Die Filme zeigen zudem im direkten Vergleich mit Elektrodenfilmen erhalten aus Dispersionen mit anderen Alkohol- oder Dialkohol-Zusätzen zudem eine verringerte Rissneigung.

In einer weiter bevorzugten Ausführungsform des Verfahrens kann die Dispersion im Verfahrensschritt a) einen Gesamtfeststoffgehalt von größer oder gleich 40 Gew.-% und kleiner oder gleich 60 Gew.-% aufweisen. Für eine möglichst schonende Aufarbeitung der Dispersion und einem möglichst effizienten Trocknungsschritt hat sich dieser Gesamtanteil an Feststoffen in der Dispersion als besonders günstig herausgestellt. Es werden sehr hohe, rissfreie Filmschichtdicken erhalten, deren elektrische Eigenschaften sich nur unwesentlich von den nicht Zusatzstoff-beladenen Dispersionen unterscheiden. Bevorzugt kann der Feststoffgehalt größer oder gleich 42 Gew.-% und kleiner oder gleich 55 Gew.-% und weiterhin bevorzugt größer oder gleich 45 Gew.-% und kleiner oder gleich 52,5 Gew.-% betragen. Der Feststoffgehalt der Dispersionen kann beispielsweise über eine Thermowaage bestimmt werden.

In einer weiteren Ausgestaltung des Verfahrens kann im Verfahrensschritt b) die Mischung auf einen Stromabnehmer aufgebracht werden. Die Zusammensetzung der Dispersionen kann einerseits nach dem Trocknen zu freistehenden Elektrodenfilmen führen, welche später, beispielsweise durch mechanische Kräfte, auf die Stromabnehmer eines Batterieaufbaus fixiert werden. Es ist aber bevorzugt möglich, dass die Dispersionen direkt auf Stromabnehmerfolien ausgebracht werden. Die Dispersionen werden dann auf den Stromabnehmer getrocknet und es werden lösungsmittelfreie oder lösungsmittelarme Schichten erhalten, welche später zu den eigentlichen Elektroden konfektioniert werden können. Dies kann insbesondere die mechanische Haftung der Elektrodenfilme auf den Stromabnehmern verbessern. Die Stromabnehmer können beispielsweise aus Kupfer, Aluminium oder anderen Metallen ausgestaltet sein.

Im Rahmen einer weiterhin bevorzugten Ausgestaltung des Verfahrens kann der Stromabnehmer ein beschichteter Stromabnehmer sein. Das erfindungsgemäße Verfahren mit Zusatz einer bestimmten Menge an Butandiol, beispielsweise an 1,3-BG, zur Dispersion, kann insbesondere beim direkten Aufbringen auf beschichtete Elektrodenoberflächen zu einer verbesserten Anhaftung der Elektrodenfilme beitragen. Die im Rahmen von Batterieaufbauten verwendeten Beschichtungen der Stromabnehmer sind dem Fachmann bekannt.

In einer bevorzugten Ausführungsform des Verfahrens kann im Verfahrensschritt a) das Butandiol erst am Ende des Mischens der übrigen Bestandteile zur Mischung gegeben werden. Zum Erhalt einer möglichst homogenen Dispersion und unter Schonung der Struktur der eingebrachten Bindermaterialen hat es sich als günstig erwiesen, dass das Butandiol erst nach dem Mischen der anderen Bestandteile zur Dispersion gegeben wird. Der Anteil an eingesetzten Scherkräften kann in dieser Reihenfolge am Ende des Mischprozesses klein gehalten werden. Das Butandiol lässt sich trotz des Einbringens einer nur geringen Menge an Mischenergie homogen im Lösungsmittel, insbesondere Wasser, verteilen und seinen positiven Einfluss in Form einer verringerten Rissbildung beim Trocknen entfalten. Es lassen sich mechanisch deutlich festere Filme erhalten als in Mischverfahren, in welchen das Butandiol schon am Anfang vorgelegt oder aber die Dispersion nach Zugabe des Butandiols sehr lange geschert oder mechanisch beansprucht wird.

Innerhalb einer weiter bevorzugten Ausgestaltung des Verfahrens kann der Verfahrensschritt c) in einem Temperaturbereich von größer oder gleich 50°C und kleiner oder gleich 200°C durchgeführt werden. Zum Erhalt möglichst rissfreier Filme hat es sich als günstig herausgestellt, dass die Trocknung der Elektrodenfilme in einem mittleren Temperaturbereich stattfindet. Die Trocknung kann, verständlicherweise, mit sehr niedrigen Temperaturen, beispielsweise bei Raumtemperatur, mit oder ohne Vakuum erfolgen. Dieser Prozess führt zu rissfreien Filmen, dauert aber sehr lange. Durch den Butandiol-Zusatz lassen sich des Weiteren auch höhere Trocknungstemperaturen einsetzen, ohne dass eine Rissbildung in den Filmen, auch unter sehr hohen Schichtdicken größer oder gleich 200 µm, beobachtet wird. Diese Ergebnisse lassen sich nicht ohne Zusatz und auch nicht durch den Zusatz vergleichbarer Alkohole erhalten. Bevorzugt kann die Temperatur auch kleiner oder gleich 150°C betragen.

Innerhalb eines weiter bevorzugten Aspektes des Verfahrens kann das Trocknen zumindest teilweise unter reduziertem Druck stattfinden. Durch das Trocknen unter Unterdruck oder im Vakuum können Elektrodenfilme mit einer verbesserten mechanischen Festigkeit erhalten werden. Zudem hat sich unerwarteter Weise gezeigt, dass beim direkten Aufbringen der Dispersion auf einem Stromabnehmer eine deutlich verbesserte Anhaftung des Elektrodenfilms an dem Stromabnehmer durch eine Trocknung unter Vakuum erhalten werden kann.

Innerhalb eines weiter bevorzugten Aspektes des Verfahrens kann die Viskosität der Dispersion bei einer Scherrate von 50 s⁻¹ und bei Raumtemperatur größer oder gleich 0,5 Pa*s und kleiner oder gleich 1,5 Pa*s betragen. Zum Erhalt möglichst homogener und sehr hoher Nassfilmschichtdicken hat sich oben angegebener Viskositätsbereich als besonders geeignet erwiesen. Dispersionen in diesem Viskositätsbereich und signifikanten Butandiol-Anteil können ohne große Anisotropien durch eine Vielzahl unterschiedlicher Extrusionsverfahren in sehr hohen Schichtdicken ausgebracht werden und zeigen nach dem Trocknen keine, oder nur eine sehr geringe Rissbildung.

Des Weiteren erfindungsgemäß ist die Verwendung des erfindungsgemäßen Verfahrens zur Herstellung von Elektrodenfilmen mit einer Trockenschichtdicke von größer oder gleich 100 µm und kleiner oder gleich 600 µm für sekundäre Alkali-Ionen-Energiespeichervorrichtungen. Mittels des erfindungsgemäßen Verfahrens lassen sich insbesondere Elektrodenfilme für Alkali-lonen-Energiespeichervorrichtungen herstellen, welche sehr gute elektrische Eigenschaften und hohe Zyklenzahlen aufweisen. Ohne durch die Theorie gebunden zu sein scheint insbesondere die Zyklenzahl auch dadurch positiv beeinflusst zu werden, dass die Elektrodenfilme keine Unstetigkeitsstellen in Form von Mikro- oder Makrorissen aufweisen. Dies kann die Reversibilität der Ein- und Auslagerung der Alkali-Spezies verbessern und Fehlfunktionen aufgrund eines mechanischen Versagens der Elektrodenstruktur verhindern. Bevorzugt kann es sich bei den Alkali-Ionen-Energiespeichervorrichtungen um Li-lonenBatterien handeln.

Des Weiteren erfindungsgemäß ist ein Elektrodenfilm für sekundäre Alkali-lonen-Energiespeichervorrichtungen, wobei der Elektrodenfilm eine Schichtdicke von größer oder gleich 100 µm und kleiner oder gleich 600 µm aufweist und
- Aktivmaterial in einem Anteil von größer oder gleich 90 Gew.-% und kleiner oder gleich 98 Gew.-%;
- Leitfähigkeitszusätze in einem Anteil von größer oder gleich 1 Gew.-% und kleiner oder gleich 5 Gew.-%,
- einen oder mehrere Binder in einem Anteil von größer oder gleich 2 Gew.-% und kleiner oder gleich 6 Gew.-%, und
- 1,3 Butandiol in einem Anteil von größer oder gleich 0,001 Gew.-% und kleiner oder gleich 0,1 Gew.-%
umfasst, wobei sich die Gewichtsanteile zu 100 Gew.-% ergänzen. Die erfindungsgemäßen Elektrodenfilme zeigen zu konventionellen Elektrodenfilmen sehr vergleichbare elektrische Eigenschaften, können aber aufgrund des verbesserten mechanischen Zusammenhalts der Elektrodenschichten, ohne Mikro- und Makrorisse, eine verbesserte Zyklenstabilität aufweisen. Neben der verbesserten Ausbeute im Rahmen der Herstellung lassen sich insbesondere auch Schichtdicken erreichen, welche mit konventionellen Verfahren aufgrund der Rissproblematik so nicht darstellbar wären. Bevorzugt kann die Trockenfilmdicke der Schichten größer oder gleich 150 µm und kleiner oder gleich 500 µm, weiter bevorzugt größer oder gleich 2000 µm und kleiner oder gleich 500 µm und weiterhin bevorzugt größer oder gleich 250 µm und kleiner oder gleich 450 µm betragen. Die weiteren Vorteile der erfindungsgemäßen Elektrodenfilme für sekundäre Alkali-lonen-Energiespeichervorrichtungen wurden schon im Rahmen der Vorteile der resultierenden Produkteeigenschaften des erfindungsgemäßen Verfahrens diskutiert. An dieser Stelle wird explizit auf die dort genannten Vorteile auch für die Elektrodenfilme Bezug genommen. Bevorzugt kann der Gehalt an 1,3-BG auch kleiner oder gleich 0,05 Gew.-% und weiter

bevorzugt kleiner oder gleich 0,01 Gew.-% betragen. Der Gehalt an 1,3-BG kann beispielsweise über eine HPLC Messung des ausgewaschenen Elektrodenfilms bestimmt werden.

### Beispiele:

### I) Vergleich unterschiedlicher Diol-Zusätze

Zum Vergleich unterschiedlicher Zusätze in der Herstellung von Anoden wurden verschiedene Alkohole und Polyole in einer Konzentration von 4 Gew.-% bezogen auf die Gesamtmasse der Dispersion zu einer Grunddispersion gegeben. Die Referenzrezeptur setzte sich zusammen aus 95 Gew.-% Graphit, 2 Gew.-% CMC, 2 Gew.-% SBR, 1 Gew.-% Ruß. Der Feststoffanteil der wässrigen Dispersion betrug 40,5 Gew.-%. Die Herstellung der Dispersion erfolgte in einer Schwingmühle. Die Filme wurden über ein Filmziehgerät in einer Nassschichtdicke von ca. 300 µm auf eine Trägerfolie aufgegeben und bei 100°C getrocknet. Die Trockenfilmdicke betrug ca. 100 µm. Neben der Referenz ohne Zusatz wurden auch Proben mit Glycerin, 1,2-Propandiol, sowie 1,3-Propandiol mit einer Konzentration von jeweils 4 Gew.-% aufbereitet. Nach der Trocknung zeigt sich für die unterschiedlichen Additive ein unterschiedliches Bild bezüglich der Rissbildung. Glycerin zeigt den geringsten Einfluss auf die Rissbildung und die getrockneten Filme zeigen die meisten Risse. Bezüglich der Rissbildung etwas besser sind das 1,3-Propandiol und wieder etwas besser das 1,2-Propandiol. Mit Abstand die besten Ergebnisse liefert das 1,3-Butandiol. Die Filme zeigen die wenigsten Risse und das homogenste Erscheinungsbild. Dieser Versuch belegt, dass in einer relativ homogenen Untergruppe an Zusätzen, die niederen Diole, signifikante Unterschiede in Bezug auf die Rissbildung bei der Herstellung von Elektrodenfilmen existieren.

### II) Herstellung von Elektrodenfilmen unter Einsatz von 1,3-Butandiol

Zur näheren Charakterisierung der Elektrodenfilme mit einem Zusatz von 1,3-BG wurden Referenz-Elektrodenfilme aus einem Grafit-Aktivmaterial, Ruß als Leitfähigkeitszusatz, zwei unterschiedlichen Bindern (CMC und SBR) und Wasser als Lösungsmittel hergestellt. Zur Herstellung der erfindungsgemäßen Elektrodenfilme wurde ein Butandiol in Form des 1,3 Butandiols in einer Konzentration von 3,2 Gew.-% bezogen auf das Gesamtgewicht der Dispersion zur Referenz als Zusatzkomponente zugesetzt.

### II.1) Herstellung der Dispersion

Für die Herstellung der Dispersion wurden folgende Komponenten verwendet: Graphit SMG-A3, Hitachi Chemicals, Leitruß Super C65, Imerys, SBR Latexbinder TRD 2001, JSR Micro, CMC CRT 2000 PA07, Lösungsmittel entionisiertes Wasser.

Der Binder CMC wurde als 2 Gew.-% wässrige Lösung vorgelegt und durch Zugabe von Graphit und Leitruß anschließend zu einer Dispersion mit der folgenden Gewichtszusammensetzung verarbeitet: Graphit:Leitruß:SBR:CMC = 96 : 1,5 : 1,25 : 1,25. Das Mischen der Dispersion erfolgte in einem Dissolvermischer (Dispermat, VMA Getzmann, Rührscheibe mit ø 50 mm). Die Zugabe des 1,3 BGs erfolgte nach dem Mischen der übrigen Komponenten, wobei das Einmischen des Zusatzes bei niedrigen Umdrehungsgeschwindigkeiten stattfand. Die Dispersion wurde anschließend mittels Unterdruck entgast. Der Feststoffgehalt der Dispersionen betrug ohne Zusatz des 1,3-BGs 52,3 Gew.-%. Der Feststoffgehalt der Dispersionen mit Zusatz des 1,3-BGs betrug 50,7 Gew.-%. Die Viskosität bei 25°C und einer Scherrate von 50 s⁻¹ betrug für die Referenzprobe ohne Zusatz 1,6 Pas und für die Probe mit 1,3 BG-Zusatz 1,0 Pas (Rheometer Paar Physica MCR 302, Platte-Platte-Geometrie mit Durchmesser 50 mm).

### II.2) Ausbringen der Dispersion

Die Herstellung der Elektrodenschichten erfolgte in einer Rolle-zu-Rolle-Beschichtungsanlage (Mathis KTF-S) mit Rakel-Auftragseinheit. Als Substrat wurde eine Kupferfolie mit einer Dicke von 10 µm verwendet. Die Dispersionen wurden jeweils in einer Nassfilmschichtdicke von ca. 300-340 µm ausgebracht.

### II.3) Trocknung der Dispersion

Die als Film ausgebrachte Schicht wurde in einem Temperaturbereich von 30°C bis 50°C in einem Trocknungstunnel getrocknet.

### III) Charakterisierung der Dispersion und der Elektrodenfilme

Die Elektrodenfilme zeigen nach der Trocknung eine Dicke von 240 µm für die Referenz und 230 µm für die Probe mit 1,3 BG-Zusatz. Die etwas geringere Schichtdicke ergibt sich aufgrund des etwas geringeren Feststoffgehaltes der Dispersion der 1,3 BG-Probe. Die Referenzprobe zeigt deutliche Risse im Elektrodenfilm nach der Trocknung, wohingegen die Elektrodenfilme aus der Dispersion mit 1,3 BG-Zusatz rissfrei sind.

Zur Charakterisierung der Elektrodenfilme auf den Stromabnehmern wurde eine Haftfestigkeitsmessung durchgeführt. Die Messung erfolgte über ein zwikiLine Z2.5/TN mit 10N Messzelle (Zwick-Roell). Es wurde ein 90°-Abzugstest (DIN EN 28510-1) durchgeführt. Dazu wurden Elektrodenstreifen mit Abmessungen von 80 mm x 17 mm ausgestanzt und mit doppelseitigem Klebeband auf der Beschichtungsseite auf einen Probenhalter fixiert. Die Metallfolie wurde mit konstanter Geschwindigkeit von 600 mm/min abgezogen und aus der dazu notwendigen Kraft die Haftfestigkeit in N/m berechnet.

Für nicht mechanisch nachbehandelte (unkalandrierte) aber vakuumgetrocknete Proben ergibt sich eine Haftfestigkeit für die Referenz von 5,1 ± 0,1 N/m. Die Haftfestigkeit der entsprechenden 1,3-BG-Proben liegt deutlich höher und beträgt 7,1 ± 0,2 N/m. Insbesondere die Vakkumbehandlung oder -Trocknung der erfindungsgemäßen Elektrodenfilme kann zu einer deutlichen Verbesserung der Haftfestigkeit der Elektrodenfilme auf den Stromabnehmern führen. Es ist erstaunlich, dass ein 1,3 BG-Zusatz neben der Rissfreiheit der Schichten in Kombination mit einem Vakuumschritt anscheinend auch zur Verbesserung der Anhaftung des Elektrodenfilms beitragen kann.

Die Filme wurden weiterhin auf ihre elektrischen Eigenschaften hin überprüft. Es wurde eine Bestimmung des spezifischen Widerstands durchgeführt. Die Messung erfolgte mit einem Elektrodenwiderstandsmesssystem vom Typ Hioki RM2610. Dazu wurden pro Elektrode 6 Messungen an verschiedenen Positionen durchgeführt und der Mittelwert mit Standardabweichung berechnet. Der spezifische elektrische Widerstand einer nicht kalandrierten Referenzschicht betrug 73,5 ± 1,9 mΩ*cm. Der spezifische elektrische Widerstand eines kalandrierten Referenzfilmes betrug 71,3 ± 2,3 mΩ*cm. Der spezifische elektrische Widerstand einer nicht kalandrierten 1,3 BG-Schicht betrug 74,1 ± 1,4 mΩ*cm. Der spezifische elektrische Widerstand eines kalandrierten 1,3 BG-Filmes betrug 69,3 ± 2,9 mΩ*cm. Somit unterscheiden sich die spezifischen elektrischen Widerstände zwischen der Referenz und den erfindungsgemäß hergestellten Elektrodenfilme nicht signifikant.

## Patentansprüche

1. Verfahren zur Herstellung dicker Elektrodenfilme mit einer Schichtdicke von größer oder gleich 100 µm und kleiner oder gleich 600 µm für sekundäre Alkali-lonen-Energiespeichervorrichtungen, **dadurch gekennzeichnet, dass** das Verfahren die Schritte umfasst:
a) Herstellen einer Dispersion umfassend mindestens ein Lösungsmittel und Feststoffe mit einem Gesamtfeststoffgehalt der Dispersion von größer oder gleich 40 Gew.-% und kleiner oder gleich 80 Gew.-%, wobei die Feststoffe
- ein Aktivmaterial in einem Anteil von größer oder gleich 75 Gew.-% und kleiner oder gleich 98 Gew.-%,
- einen oder mehrere Leitfähigkeitszusätze in einem Anteil von größer oder gleich 0,5 Gew.-% und kleiner oder gleich 5 Gew.-% und
- ein oder mehrere Binder in einem Anteil von größer oder gleich 1 Gew.-% und kleiner oder gleich 10 Gew.-%
umfassen, und sich die Gewichtsanteile der Feststoffe in der Dispersion zu 100 Gew.-% ergänzen;
und Einmischen von Butandiol in einer Konzentration von größer oder gleich 2 Gew.-% und kleiner oder gleich 10 Gew.-% bezogen auf das Gesamtgewicht in die Dispersion;
b) Ausbringen der Dispersion in einer Schichtdicke von größer oder gleich 200 µm und kleiner oder gleich 1200 µm; und
c) Trocknen der ausgebrachten Dispersion unter Erhalt eines Elektrodenfilms.

2. Verfahren nach Anspruch 1, wobei das Lösungsmittel Wasser ist.

3. Verfahren nach einem der vorhergehenden Ansprüche, wobei das Butandiol 1,3 Butandiol ist.

4. Verfahren nach einem der vorhergehenden Ansprüche, wobei das Butandiol in einer Konzentration von größer oder gleich 2 Gew.-% und kleiner oder gleich 6 Gew.-% zur Dispersion gegeben wird.

5. Verfahren nach einem der vorhergehenden Ansprüche, wobei als Binder mindestens zwei unterschiedlicher Binder eingesetzt werden, wobei einer der Binder in Wasser quellbar und der andere Binder in Wasser nicht quellbar ist.

6. Verfahren nach Anspruch 5, wobei als Binder Carboxymethylcellulose und Styrol-Butadien-Kautschuk (SBR) eingesetzt werden.

7. Verfahren nach einem der vorhergehenden Ansprüche, wobei im Verfahrensschritt
a)
- das Aktivmaterial in einem Anteil von größer oder gleich 90 Gew.-% und kleiner oder gleich 98 Gew.-%;
- der Leitfähigkeitszusatz in einem Anteil von größer oder gleich 1 Gew.-% und kleiner oder gleich 5 Gew.-% und
- der oder die Binder in einem Anteil von größer oder gleich 2 Gew.-% und kleiner oder gleich 6 Gew.-%
bezogen auf die gesamten Feststoffe in der Dispersion vorliegen und sich die Gewichtsanteile der Feststoffe in der Dispersion zu 100 Gew.-% ergänzen.

8. Verfahren nach einem der vorhergehenden Ansprüche, wobei die Dispersion im Verfahrensschritt a) einen Gesamtfeststoffgehalt von größer oder gleich 40 Gew.-% und kleiner oder gleich 60 Gew.-% aufweist.

9. Verfahren nach einem der vorhergehenden Ansprüche, wobei im Verfahrensschritt b) die Mischung auf einen Stromabnehmer aufgebracht wird.

10. Verfahren nach Anspruch 9, wobei der Stromabnehmer ein beschichteter Stromabnehmer ist.

11. Verfahren nach einem der vorhergehenden Ansprüche, wobei im Verfahrensschritt a) das Butandiol erst am Ende des Mischens der übrigen Bestandteile zur Mischung gegeben wird.

12. Verfahren nach einem der vorhergehenden Ansprüche, wobei der Verfahrensschritt c) in einem Temperaturbereich von größer oder gleich 50°C und kleiner oder gleich 200°C durchgeführt wird.

13. Verfahren nach Anspruch 12, wobei das Trocknen zumindest teilweise unter reduziertem Druck stattfindet.

14. Verwendung eines Verfahrens nach einem der Ansprüche 1 - 13 zur Herstellung von Elektrodenfilmen mit einer Trockenschichtdicke von größer oder gleich 100 µm und kleiner oder gleich 600 µm für sekundäre Alkali-lonen-Energiespeichervorrichtungen.

15. Elektrodenfilm für sekundäre Alkali-Ionen-Energiespeichervorrichtungen, **dadurch gekennzeichnet, dass** der Elektrodenfilm eine Schichtdicke von größer oder gleich 100 µm und kleiner oder gleich 600 µm aufweist und
- Aktivmaterial in einem Anteil von größer oder gleich 90 Gew.-% und kleiner oder gleich 98 Gew.-%;
- Leitfähigkeitszusätze in einem Anteil von größer oder gleich 1 Gew.-% und kleiner oder gleich 5 Gew.-%,
- einen oder mehrere Binder in einem Anteil von größer oder gleich 2 Gew.-% und kleiner oder gleich 6 Gew.-%, und
- 1,3 Butandiol in einem Anteil von größer oder gleich 0,001 Gew.-% und kleiner oder gleich 0,1 Gew.-%
umfasst, wobei sich die Gewichtsanteile zu 100 Gew.-% ergänzen.
